# EUROPEAN PATENT SPECIFICATION

(11) **EP 2 791 641 B1**
(45) Date of publication and mention of the grant of the patent: **31.10.2018**
(21) Application number: 12812695.0
(22) Date of filing: 12.12.2012
(51) Int. Cl.: G01M 5/00, G01N 3/20

(54) **APPARATUS FOR TESTING VEHICLE RESTRAINT MEMBERS**
VORRICHTUNG ZUM TESTEN VON FAHRZEUGRÜCKHALTEELEMENTEN
APPAREIL POUR L'ESSAI D'ORGANES DE RETENUE DE VÉHICULE

(30) Priority: 13.12.2011 GB 201121392
(43) Date of publication of application: 22.10.2014
(73) Proprietor: Versco Ltd., Bigby, Barnetby DN38 6EW (GB)
(72) Inventor: BALMER, Stephen, Bigby Barnetby DN38 6EW (GB)
(74) Representative: Loven, Keith James
(86) International application number: PCT/GB2012/053112
(87) International publication number: WO 2013/088146

(56) References cited:
- GB-A- 2 250 825
- US-A- 4 543 126
- US-A- 6 053 052
- US-A- 6 116 077

## Description

### Field of the Invention

This invention relates to apparatus for testing vehicle restraint members.

### Background to the Invention

Crash barriers (sometimes referred to as safety fences) are used by highways agencies and road authorities around the world to limit the travel of a vehicle in a specified direction. The major component of crash barriers is a series of vehicle restraint members, usually in the form of Corrugated Beams or Open Box Beams. Crash barriers are most commonly used to separate the carriage ways of high speed roads having two or more lanes of traffic in each direction.

Corrugated Beams, often referred to as ARMCO barriers, are elongated beams of a profiled or corrugated nature, having a traffic facing side and a non-traffic facing side. Such beams are constructed from galvanised steel. Open Box Beams are essentially of channel construction having three closed sides and one open side, whereby the closed sides are orientated such that they face upwards, downwards and towards the traffic stream.

For the purposes of this specification, the traffic facing side of the vehicle restraint member will be referred to as the front face. The non- traffic facing side will be referred to as the rear face.

Vehicle restraint members are constructed to deform in a particular way, thus balancing the need to prevent a vehicle from penetrating the opposite carriageway, or colliding with road side hazards in the verge, with the need to prevent the vehicle from simply bouncing off the crash barrier.

Corrugated Beams in particular are designed to be impacted from a specified side, specifically the front face. These beams are sufficiently strong such that they will not collapse upon impact, but rather will deform controllably to absorb a proportion of the energy of the impact.

Most roads having two or more lanes of traffic travelling in opposite directions will have a central reservation. The purpose of the central reservation is to separate the traffic moving in opposite directions, protecting the infrastructure, such as lighting, situated between carriageways.

Each side of the central reservation, and lengths of carriageway where hazards in the verge are present, will have a series of vehicle restraint members joined together to form a continuous crash barrier. In the United Kingdom, it is usual for such vehicle restraint members to be either Corrugated Beams or Open Box Beams. Due to the different nature of the two types of beams, they are not compatible with one another but a length of one type may be connected to a length of another type.

According to Highways Agency specifications, crash barriers must be renewed every 20 years. Currently, once corrugated beams or open box beams have been removed, they are disposed of as scrap.

The disposal of crash barrier components is not desirable for a number of reasons. Raw material prices are increasing each year, therefore it is not possible to accurately budget for the replacement of crash barriers in what in the case of most countries, are vast and complex traffic infrastructures. Most crash barrier components that are removed and disposed of as scrap are structurally sound and capable of reuse.

There is also an environmental aspect to the scrapping of crash barriers which are capable of re-use. For every tonne of new steel produced, 500kg of carbon dioxide is released into the atmosphere and the fossil energy equivalent of 2.07 barrels of oil is consumed. It would therefore be preferable if a significant proportion of crash barrier components could be reused.

A recent EC directive, 2008/58/EC, requires that EU member states follow a waste hierarchy where the preparation for re-use of components such as crash barriers, where possible, is higher than recycling or disposal. This has introduced pressure on government departments to set policies requiring that as many components as possible are re-used during renewal of transport infrastructures, hence measures must be put in place to meet the requirements of EC Directive 2008/58/EC which became mandatory in the UK in December 2010.

Similar standards have been introduced in other member states. It is necessary to perform certain physical tests to determine if crash barrier components are suitable for re-use. In some EU countries, such testing consists of only a visual inspection, and in some cases, roll forming to refresh the original profile. A visual inspection is a subjective test relying on the skill and the experience of the person inspecting the crash barrier components. A visually inspected and even a roll formed beam that is not objectively tested to ensure it meets mechanical strength and performance standards, may well be not suitable for reuse.

As crash barriers are safety critical components, the UK government is not willing to accept a visual inspection as a method of approving dismantled and previously used crash barrier components for re-use. A visual inspection will identify obvious defects such as corrosion or impact damage but not structural defects caused by fatigue. Additionally, not all visual defects are indicative that crash barrier components are not suitable for re-use.

US6053052 discloses a machine for testing the performance of wood-based panels by supporting the ends of a panel, applying a load to the centre of panel and recording the deflection resulting. US6116077 discloses testing a road traffic barrier by mounting the barrier between nodes connected to Hopkinson output bars equipped with strain gauges to enable estimation of mean force of impact and then propelling a vehicle into the barrier.

### Summary of the Invention

The embodiment of the present invention provides apparatus for testing vehicle restraint members, comprising:
a support for each end of a vehicle restraint member, each of said supports being provided with a clamp, each clamp comprising an upper and lower jaw profiled to correspond to that of the vehicle restraint member, to apply a clamping force to the respective end of the vehicle restraint member;
means for applying a pre-determined deflecting load to the front face of the member, and intermediate to the ends thereof; and
a measuring device for measuring the deflection of the vehicle restraint member, resulting from application of said deflecting load, and is characterised in that each clamp is provided a measuring device to determine the thickness of a vehicle restraint member by measuring the distance between the upper and lower jaws of the clamp when closed .

The present invention provides for a more effective testing process of vehicle restraint members than the visual inspection techniques currently utilised in continental Europe. In certain countries, visual inspection for damage to crash barrier components, and reshaping to their original profile, are the only methods used to determine whether such components are suitable for re-use.

The invention also provides a method for testing vehicle restraint members comprising:
clamping each end of a vehicle restraint member;
applying a pre-determined deflecting load to the centre of the vehicle restraint member, whereby the load is applied to the front face;
measuring the deflection of the vehicle restraint member at the position the deflecting load is applied; and
comparing the deflection of the vehicle restraint member with a pre-determined maximum deflection value, characterised by measuring the thickness of the vehicle restraint member at least at the points at which said vehicle restraint member is clamped.

The present invention further allows for vehicle restraint members exhibiting signs of minor damage or corrosion to be objectively tested and processed if necessary. It is envisaged that the apparatus and method of the present invention will significantly reduce the number of new vehicle restraint members required. Such a reduction in new vehicle restraint members will have a direct positive financial and environmental impact on countries adopting the invention, and will meet the requirements of EC Directive 2008/58/EC which became mandatory in the UK in December 2010.

### Brief Description of the Drawings

In the drawings, which illustrate an exemplary embodiment of the invention:
Figure 1 shows a front elevation of the embodiment of the present invention;
Figure 2 shows a side elevation of a first press tool configured for receiving a Corrugated Beam vehicle restraint member;
Figure 3 shows a side elevation of a first press tool configured for receiving an Open Box Beam vehicle restraint member;
Figure 4 shows a side elevation of the centre press tool configured for receiving a Corrugated Beam vehicle restraint member; and
Figure 5 shows a front elevation of a roller table and top platen assembly.

### Detailed Description of the Illustrated Embodiment

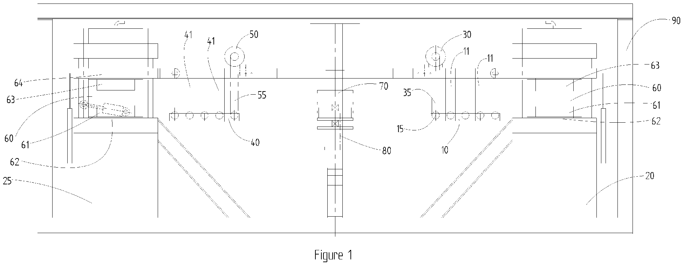

Referring to the figures, in Figure 1, a vehicle restraint member (not shown) is lifted on to a first roller table 10 so that a first end of the vehicle restraint member is supported by the first roller table 10, and a second end is supported by a first sixty-three tonne press 20.

A first roller table drive unit 30 connects to the first roller table 10 via a drive chain or belt 35. The drive roller 15 on the first roller table 10 will propel the vehicle restraint member in a specified direction at a specified speed. A second roller table 40 is provided adjacent to a second sixty-three tonne press 25. The second roller table 40 will receive the first end of the vehicle restraint member while the second end is still supported by the first roller table 10. The vehicle restraint member will continue moving in a pre-determined direction until such a time that a limit switch (not shown) is tripped causing the momentum of the vehicle restraint member to cease. Alternatively, the motion of the vehicle restraint member could be manually controlled by manual activation and deactivation of the roller drive units 30, 50.

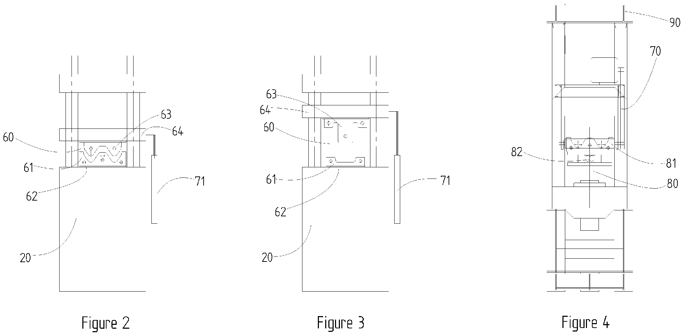

The vehicle restraint member is clamped in position by way of a clamp tool 60, as shown in Figures 2 and 3, provided on each sixty-three tonne press, corresponding to the profile of the vehicle restraint member to be clamped. Once the vehicle restraint member is in the desired position, the two sixty-three tonne presses are closed with a pre-determined pressure applied at each end thereof.

The illustrated embodiment shows a vertical clamping force being applied to each end of the vehicle restraint member. It will be appreciated that the clamping force may be applied vertically, horizontally or at any angle in-between.

The clamp tool in the illustrated embodiment 60 comprises of two parts, a fixed base 61, attached to the lower platens 62 of the sixty-three tonne presses and corresponding to the profile of the front or road facing side of the vehicle restraint member, and, a movable portion 63 attached to the underside of the top platen 64 of the sixty-three tonne press and corresponding to the profile of the rear or non-road facing side of the vehicle restraint member.

When closed, the clamp tool 60 securely holds the vehicle restraint member in place without deforming the area of the vehicle restraint member which is clamped. The vehicle restraint member is clamped by the clamp tool engaging the member's front and rear faces.

Each clamp tool further is provided with a means of controlling the press clamping load (Not Shown) to securely hold each end of the vehicle restraint member. The level of this clamping force is important to ensure the vehicle restraint member is held firmly enough to allow the deflection load to generate elastic extension of the steel vehicle restraint member under test.

A measurement device 71 is provided at the clamp tool 60 to calculate the thickness of the vehicle restraint member. The measuring device 71, measures the thickness of the vehicle restraint member by detecting the distance between the upper 63 and lower 61 jaws of the clamp tool 60 when closed.

The top platens 64 of both sixty-three tonne presses 20, 25 are connected by hinged structural beams which extend between both of said presses 20, 25.

Referring to Figure 4, a hydraulic ram 80 is provided with jig tooling 81 corresponding to the profile of the front or road face of the vehicle restraint member. Having this profiled tooling 81 prevents deformation of the vehicle restraint member during application of a deflecting load. A load cell 82 is provided to measure loads on the jig tooling 81. A deflection sensor 70 is provided to measure movement of the jig tooling 81 and ram 80.

The hydraulic ram 80 is positioned below the vehicle restraint member and in-line with the deflection sensor 70. When a pre-determined deflecting load measured and set by the load cell 82 is applied to the centre of the vehicle restraint member by the hydraulic ram 80, via the jig tooling, the sensor 70 will measure the amount of deflection exhibited by the vehicle restraint member at its centre. The level of this deflection load is important to ensure the deflection generates elastic extension of the steel vehicle restraint member under test but does not induce plastic deformation of the steel vehicle restraint member under test. The deflection of the vehicle restraint member is compared to a known maximum deflection as expected to be exhibited by a new vehicle restraint member meeting specified dimensional tolerances and material quality.

The top platens 64 and their associated linking support beams, support both roller tables 10, 40 suspended below and both roller table drive units 30, 50 mounted on the upper surfaces of said platens 64. Roller table drive units 30, 50 may alternatively be attached directly to the underside of roller tables 10, 40. The position of each of the roller tables 10, 40 in relation to the top platens 64 are variable by adjustment of the length of the mounting 11, 41 and drive chains 35, 55. Once the vehicle restraint member has been positioned in the clamps 60 provided on each sixty-three tonne press 20, 25, the roller tables 10, 40 are lowered to ensure that the vehicle restraint member is supported solely at its ends by the clamps 60, and is firmly held by the application of a preset clamping force.

Once the load and deflection readings are taken and recorded, the platens 64 and their connecting beams are raised, releasing the clamping force, and the roller tables lift the vehicle restraint member clear of the lower jaws 61 of the clamp tool 60. The ram 80 is extended to lift the crash barrier on the jig tooling 81 clear of the roller tables 10, 40, and the load cell 82 is used in this phase of the test procedure to compare the weight of the vehicle restraint member to the calculated weight taken from standard component drawings. Load cells to measure the weight may alternatively be provided at each sixty-three tonne press 20, 35, within the roller tables 10, 40 or their supports 11, 41.

A central electronic logging unit and display array (not shown) records all sensor results for each individual beam tested, and provided a visual display so that the operator can record them and act appropriately in passing or failing the vehicle restraint member under test. A data log output allows results to be exported to a computer database.

A substantial support frame 90 is provided for each component of the apparatus to be attached to, to ensure a rigid fixing of the clamp presses 20, 25 and the deflection press 80 to allow accurate measurements to be taken. It would be possible to relocate the entire apparatus by lifting via the mounting points (not shown) on the support frame 90.

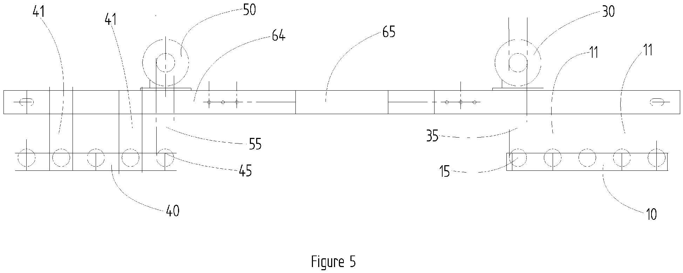

Referring to Figure 5, an enlarged view of the assembly comprising: the top platens, the roller tables, and roller table drive units, is shown for clarity.

In conjunction with the apparatus, a method of testing vehicle restraint members is proposed. Upon dismantling of a vehicle restraint member, each vehicle restraint member is removed from its original location to a nominated renovation facility.

On arrival at the renovation facility, all vehicle restraint members are visually inspected for signs of damage. Any component exhibiting signs of twisting, splitting, modification or significant deformation, will be segregated and consigned for disposal as scrap. An environmental certificate will be issued for each vehicle restraint member rejected to certify that such vehicle restraint members are not suitable for reuse.

The vehicle restraint members which pass the initial basic inspection will be identified by way of reference to appropriate component reference drawings. The original manufactured weight of the steel forming the vehicle restraint member will be calculated from the component reference drawings. Each vehicle restraint member will be assigned and marked with a unique identification number which will be used to log and keep track of the relevant tests.

A vehicle restraint member is lifted on to the first roller table 10 and driven into position via the drive rollers 15, 55 on both the first and second roller tables 10, 40. The vehicle restraint member is then weighed by a load cell to accurately determine any weight of steel lost through corrosion. Any vehicle restraint member that has lost over 9% of its original weight will be segregated and consigned for disposal as scrap. Any vehicle restraint member that has lost between 7-9% of its original weight will be marked as potentially suitable and allowed to proceed to the next test. Any vehicle restraint member that has lost less than 7% of its original weight will also proceed to the next test.

The profile of each vehicle restraint member will be measured in at least four locations to ensure that it falls within the tolerances defined in the relevant component reference drawing. Each vehicle restraint member will be subjected to a deflection load test applied to the traffic facing side of the vehicle restraint member. The load is applied to the centre of the vehicle restraint member by a hydraulic ram 80 and verified by a load cell positioned below the vehicle restraint member and in-line with the deflecting load tool. The deflection of the vehicle restraint member is measured at its centre by a sensor 70 and compared to the deflection that a new vehicle restraint member would exhibit. The variation in deflection must be within 2% of that exhibited by a new vehicle restraint member.

Where, because of longitudinal curvature of the restraint member, there exists a pre-load on the load cell, the equivalent deflection to this pre-load is taken into account in measuring the deflection during testing.

The illustrated embodiment shows apparatus suitable for a vehicle restraint member which is orientated such that the traffic side of the vehicle restraint member faces downward. While this is the preferred orientation, the vehicle restraint member could be positioned in any orientation permitting the deflecting load to be applied to front face. It is preferable that the deflecting load is applied to the front face of the vehicle restraint member but the apparatus is capable of being used to apply the load to the rear face if required. The order of the tests described in this procedure may also be changed.

The results from all of the above tests will be centrally logged against the unique identification number assigned to each vehicle restraint member. A vehicle restraint member that passes each of the above tests will be segregated in a specified area for components that are certified suitable for re-use.

A vehicle restraint member which is of sufficient thickness and passes the deflecting load test but has a profile deemed to be out of tolerance will be segregated in a specified area for components that require roll forming prior to re-use. Apparatus is provided having die tools corresponding to the profile of the vehicle restraint member to be rolled. The vehicle restraint member is forced between the die tools causing its profile to be enhanced and returned to specified tolerances. Subsequent to the rolling process, such vehicle restraint members will be segregated in a specified area for components that are suitable for re-use.

Each vehicle restraint member that is certified suitable for re-use will be marked via surface impression with that components unique identification number. Any remaining galvanised coating is then removed by acid bathing or mechanical means before the vehicle restraint member is re-coated with a galvanised coating.

## Claims

1. Apparatus for the non-destructive testing of vehicle restraint members constructed from steel, comprising:
a support for each end of a vehicle restraint member, each of said supports being provided with a clamp, each clamp comprising an upper (63) and lower (61) jaw profiled to correspond to that of the vehicle restraint member, to apply a clamping force to the respective end of the vehicle restraint member;
means (80, 81) for applying a pre-determined deflecting load to the front face of the member, and intermediate to the ends thereof; and
a measuring device (70) for measuring the deflection of the vehicle restraint member, resulting from application of said deflecting load, **characterised in that** each clamp is provided with a measuring device (71) to determine the thickness of a vehicle restraint member by measuring the distance between the upper (63) and lower (61) jaws of the clamp when closed.

2. Apparatus according to Claim 1, wherein at least one support (10, 40) intermediate to the ends of a vehicle restraint member is provided.

3. Apparatus according to Claim 2, wherein said intermediate support (10, 40) comprises a plurality of rollers, at least one of said rollers being provided with drive means.

4. Apparatus according to Claim 2 or 3, wherein said intermediate support (10, 40) is movable in at least one axis out of engagement with the vehicle restraint member.

5. A non-destructive method for testing vehicle restraint members constructed from steel comprising:
clamping each end of a vehicle restraint member;
applying a pre-determined deflecting load to the centre of the vehicle restraint member, whereby the load is applied to the front face;
measuring the deflection of the vehicle restraint member at the position the deflecting load is applied; and
comparing the deflection of the vehicle restraint member with a pre-determined maximum deflection value, **characterised by** measuring the thickness of the vehicle restraint member at least at the points at which said vehicle restraint member is clamped.

6. A method according to Claim 5, further comprising comparing the profile of the vehicle restraint member to pre-determined tolerances in at least one location on said vehicle restraint member.

## Patentansprüche

1. Vorrichtung zum zerstörungsfreien Prüfen von aus Stahl konstruierten Fahrzeug-Rückhaltebauteilen, umfassend:
eine Stütze für jedes Ende eines Fahrzeug-Rückhaltebauteils, wobei jede Stütze mit einer Klemme versehen ist, wobei jede Klemme eine obere (63) und eine untere (61) Klemmbacke aufweist, welche entsprechend dem Profil des Fahrzeug-Rückhaltebauteils profiliert sind, um eine Klemmkraft auf die jeweiligen Enden des Fahrzeug-Rückhaltebauteils aufzubringen;
Mittel (80, 81) zum Aufbringen einer vorgegebenen Verformungskraft auf die Vorderseite des Bauteils zwischen den Enden desselben; und
eine Messeinrichtung (70) zum Messen der Verformung des Fahrzeug-Rückhaltebauteils, welche aus der Aufbringung besagter Verformungskraft resultiert, **dadurch gekennzeichnet, dass** jede Klemme mit einer Messeinrichtung (71) zum Erfassen der Dicke eines Fahrzeug-Rückhaltebauteils durch Messen des Abstands zwischen der oberen (63) und unteren (61) Klemmbacke der Klemme im geschlossenen Zustand versehen ist.

2. Vorrichtung nach Anspruch 1, bei der zumindest eine Stütze (10, 40) zwischen den Enden eines Fahrzeug-Rückhaltebauteils vorgesehen ist.

3. Vorrichtung nach Anspruch 2, bei der die mittlere Stütze (10, 40) eine Vielzahl von Rollen aufweist, wobei zumindest eine dieser Rollen mit einer Antriebseinrichtung versehen ist.

4. Vorrichtung nach Anspruch 2 oder 3, bei der die mittlere Stütze (10, 40) in zumindest einer Axialrichtung außer Eingriff mit dem Fahrzeug-Rückhaltebauteil bewegbar ist.

5. Verfahren zum zerstörungsfreien Prüfen von aus Stahl konstruierten Fahrzeug-Rückhaltebauteilen, umfassend:
ein Festklemmen der Enden eines Fahrzeug-Rückhaltebauteils;
ein Aufbringen einer vorgegebenen Verformungskraft auf die Mitte des Fahrzeug-Rückhaltebauteils, wobei die Kraft an der Vorderseite aufgebracht wird;
ein Messen der Verformung des Fahrzeug-Rückhaltebauteils an der Stelle, an der die Verformungskraft aufgebracht wird; und
ein Vergleichen der Verformung des Fahrzeug-Rückhaltebauteils mit einem vorgegebenen maximalen Verformungswert, **gekennzeichnet durch** ein Messen der Dicke des Fahrzeug-Rückhaltebauteils zumindest an den Punkten, an welchen das Fahrzeug Rückhaltebauteil festgeklemmt ist.

6. Verfahren nach Anspruch 5, weiterhin umfassend ein Vergleichen des Profils des Fahrzeug-Rückhaltebauteils mit vorgegebenen Toleranzen an zumindest einer Stelle an dem Fahrzeug-Rückhaltebauteil.

## Revendications

1. Appareil pour l'essai non destructif d'organes de retenue de véhicule construits à partir d'acier, comprenant :
un support pour chaque extrémité d'un organe de retenue de véhicule, chacun desdits support étant muni d'une pince, chaque pince comprenant une mâchoire supérieure (63) et une mâchoire inférieure (61) profilées pour correspondre à celui de l'organe de retenue de véhicule, pour appliquer une force de serrage sur l'extrémité respective de l'organe de retenue de véhicule ;
des moyens (80, 81) pour appliquer une charge de flexion prédéterminée sur la face avant de l'organe, et entre les extrémités de celui-ci ; et
un dispositif de mesure (70) pour mesurer le flexion de l'organe de retenue de véhicule, résultant de l'application de ladite charge de flexion, **caractérisé par le fait que** chaque pince est munie d'un dispositif de mesure (71) pour déterminer l'épaisseur d'un organe de retenue de véhicule par mesure de la distance entre les mâchoires supérieure (63) et inférieure (61) de la pince une fois fermée.

2. Appareil selon la revendication 1, dans lequel au moins un support (10, 40) entre les extrémités d'un organe de retenue de véhicule est prévu.

3. Appareil selon la revendication 2, dans lequel ledit support intermédiaire (10, 40) comprend une pluralité de rouleaux, au moins un desdits rouleaux étant muni de moyens d'entraînement.

4. Appareil selon la revendication 2 ou 3, dans lequel ledit support intermédiaire (10, 40) est déplaçable, suivant au moins un axe, hors d'engagement de l'organe de retenue de véhicule.

5. Procédé non destructif pour l'essai d'organes de retenue de véhicule construits à partir d'acier, comprenant :
serrer chaque extrémité d'un organe de retenue de véhicule ;
appliquer une charge de flexion prédéterminée au centre de l'organe de retenue de véhicule, la charge étant appliquée sur la face avant ;
mesurer la flexion de l'organe de retenue de véhicule à la position dans laquelle la charge de flexion est appliquée ; et
comparer la flexion de l'organe de retenue de véhicule à une valeur de flexion maximale prédéterminée, **caractérisé par** la mesure de l'épaisseur de l'organe de retenue de véhicule au moins au niveau des points auxquels l'organe de retenue de véhicule est serré.

6. Procédé selon la revendication 5, comprenant en outre comparer le profil de l'organe de retenue de véhicule à des tolérances prédéterminées à au moins un emplacement sur ledit organe de retenue de véhicule.
